# EUROPEAN PATENT APPLICATION

(11) **EP 2 800 393 A2**
(43) Date of publication of application: **05.11.2014**
(21) Application number: 13190002.9
(22) Date of filing: 24.10.2013
(51) Int. Cl.: H04N 21/442, H04N 21/6379, H04N 21/2385, H04N 21/2343

(54) **Image transmitting apparatus, image receiving apparatus, and control methods thereof**

(30) Priority: 03.05.2013 KR 20130050008
(71) Applicant: Samsung Electronics Co., Ltd, Gyeonggi-do 443-742 (KR)
(72) Inventor: Lee, Chang-won, Incheon (KR); Kim, Hak-jae, Gyeonggi-do (KR); Kim, Jung-keun, Gyeonggi-do (KR)
(74) Representative: Bray, Richard Anthony

(57) **Abstract**

An image transmitting apparatus including: a processor to process image content; an interface to transmit a data stream of the processed image content to an image receiving apparatus; and a controller to control the data stream to be transmitted from the interface based on a transfer method, to receive status information indicating a status of the image receiving apparatus while the data stream is transmitted, and to change at least one of the transfer method of the data stream and information quantity of the data stream transmitted per unit time in response to the status of the image receiving apparatus being determined to be changed based on the status information.

## Description

### BACKGROUND

### 1. Field

Apparatuses and methods consistent with the exemplary embodiments relate to an image transmitting apparatus and an image receiving apparatus that have various structures to generate and output image data to the outside or to process image data for display and control methods of the same, and more particularly to an image transmitting apparatus and an image receiving apparatus that have an improved structure so that a plurality of image processing apparatuses output image data to one another and receive image data from one another and control methods of the same.

### 2. Description of the Related Art

Image processing apparatuses process image data input from the outside or autonomously generated according to various kinds of processes so as to ultimately display images. In the related art, image processing apparatuses are configured as a display apparatus that have a display panel to display an image based on processed image data or as a device that does not include a display panel but processes and outputs image data to a display apparatus. Image processing processes for displaying an image may be integrated in a single device.

For various reasons (e.g., efficiency in performance of processes and functional optimization of devices), a plurality of image processing apparatuses have been connected to each other in a system to enable data transmission and reception.

For example, in the related art, such a system may be configured to include a first image processing apparatus to output image data and a second image processing apparatus to receive image data from the first image processing apparatus. The first image processing apparatus and the second image processing apparatus transmit and receive streams of image data according to a preset transfer protocol. The image data may have a relatively large or small amount of data per frame unit and the first image processing apparatus and the second image processing apparatus may have different performance levels of processing image data. Various issues arising from these aspects may cause distortion of image data in transmitting, receiving and processing image data streams according to a preset transfer protocol.

### SUMMARY

Exemplary embodiments address at least the above problems and/or disadvantages and other disadvantages not described above. Also, the exemplary embodiments are not required to overcome the disadvantages described above, and an exemplary embodiment by not overcome any of the problems described above. According to the present invention there is provided an apparatus and method as set forth in the appended claims. Other features of the invention will be apparent from the dependent claims, and the description which follows.

According to an aspect of an exemplary embodiment, there is provided an image transmitting apparatus including: a processor to process image content; an interface to transmit a data stream of the image content processed by the processor to an image receiving apparatus; and a controller to control the data stream to be transmitted from the interface based on a transfer method, to receive status information indicating a status of the image receiving apparatus while the data stream is transmitted, and to change at least one of the transfer method of the data stream and information quantity of the data stream transmitted per unit time in response to the status of the image receiving apparatus being determined to be changed based on the status information.

The interface may include a plurality of transfer paths to transmit the data stream, and the controller may select at least one of the transfer paths to transmit the data stream.

The controller may change the transfer method by changing the selected transfer path to transmit the data stream among the plurality of transfer paths.

The controller may change the transfer method by changing a transfer rate of the data stream through the selected transfer path.

The interface may further include an auxiliary communication channel to conduct two-way communication with the image receiving apparatus, and the controller may receive the status information from the image receiving apparatus through the auxiliary communication channel.

The controller may generate the data stream by changing at least one of an image quality of the image content and a resolution of the image content to change the information quantity of the data stream transmitted per unit time.

The status information may include at least one of information of a performance level indicating a processibility level of the data stream by a processor of the image receiving apparatus, information of a temperature of the image receiving apparatus, and information of a reception error in the data stream received by the image receiving apparatus, and the controller may determine that the status of the image receiving apparatus is changed when the performance level or the temperature of the image receiving apparatus is changed, or when an error occurs in the data stream received by the image receiving apparatus.

The controller may reduce the information quantity of the data stream transmitted per unit time when the performance level decreases or the temperature of the image receiving apparatus increases.

The interface may include a plurality of transfer paths to transmit the data stream, and the controller may increase a number of transfer paths used to transmit the data stream and may reduce a transfer rate per used transfer path when the performance level decreases or the temperature of the image receiving apparatus increases.

The interface may include a plurality of transfer paths to transmit the data stream, and the controller may increase a number of transfer paths used to transmit the data stream and reduces a transfer rate per used transfer path when a reception error occurs in the data stream in the image receiving apparatus.

According to an aspect of another exemplary embodiment, there is provided an image receiving apparatus including: an interface to receive a data stream of image content from an image transmitting apparatus; a processor to process the data stream received by the interface to display an image; a detector to detect a status of the image receiving apparatus; and a controller to transmit status information indicating the status detected by the detector to the image transmitting apparatus through the interface while the data stream is received by the interface so that at least one of a transfer method of the data stream and information quantity of the data stream transmitted per unit time is changed based on a result of determining a change of the status of the image receiving apparatus by the image transmitting apparatus.

The interface may include a plurality of reception paths to receive the data stream, and the transfer method may be changed by changing a selection of reception paths to receive the data stream among the reception paths.

The interface may include a plurality of reception paths to receive the data stream, and the transfer method may be changed by changing a transfer rate of the data stream through a selected reception path.

The interface may include an auxiliary communication channel to conduct two-way communication with the image transmitting apparatus, and the controller may transmit the status information through the auxiliary communication channel.

The information quantity of the data stream transmitted per unit time may be changed by changing at least one of image quality and resolution of the image content to generate the data stream.

The detector may detect at least one of a performance level indicating a processibility level of the data stream by a processor, a temperature of the image receiving apparatus, and a reception error in the data stream received by the interface, and the controller may transmit the status information including a detection result to the image transmitting apparatus.

The information quantity of the data stream transmitted per unit time may be reduced when the performance level decreases or the temperature of the image receiving apparatus increases.

The interface may include a plurality of reception paths to receive the data stream, and a number of reception paths to receive the data stream may be increased and a transfer rate per reception path to receive the data stream may be reduced when the performance level decreases or the temperature of the image receiving apparatus increases.

The interface may include a plurality of reception paths to receive the data stream, and a number of reception paths to receive the data stream may be increased and a transfer rate per reception path to receive the data stream may be reduced when a reception error occurs in the data stream received by the interface.

According to an aspect of another exemplary embodiment, there is provided a control method of an image transmitting apparatus, the control method including: transmitting a data stream of image content to an image receiving apparatus based on a transfer method; receiving status information indicating a status of the image receiving apparatus while the data stream is transmitted; and changing at least one of the transfer method of the data stream and information quantity of the data stream transmitted per unit time in response to the status of the image receiving apparatus being determined to be changed based on the status information.

According to an aspect of another exemplary embodiment, there is provided a control method of an image receiving apparatus, the control method including: receiving a data stream of image content from an image transmitting apparatus; detecting a status of the image receiving apparatus; and transmitting status information indicating the detected status to the image transmitting apparatus while the data stream is received so that at least one of a transfer method of the data stream by the image transmitting apparatus and information quantity of the data stream transmitted per unit time is changed based on a result of determining a change of the status of the image receiving apparatus by the image transmitting apparatus.

According to an aspect of another exemplary embodiment, there is provided a control method of an image receiving apparatus, the control method including: receiving from an image transmitting apparatus, through a predetermined number of transfer paths and by a predetermined transfer protocol, a data stream including image content; and detecting status information of the image receiving apparatus; transmitting, to the image transmitting apparatus, the status information such that, if it is determined, based on the status information, that a status of the image receiving apparatus is changed, at least one of the transfer protocol, the number of transfer paths, and bitrate of the data stream is changed by the image transmitting apparatus.

The image receiving apparatus and the image transmitting apparatus may be connected to each other via a cable implementing to a DisplayPort protocol.

The transfer protocol may selected from the group consisting of: a reduced bit rate (RBR) protocol, a high bit rate 1 (HBR1) protocol, and a high bit rate 2 (HBR2) protocol.

The status information may include at least one of a performance level of the image receiving apparatus, a temperature of the image receiving apparatus, and a reception error in the received data stream.

According to an aspect of another exemplary embodiment, there is provided a control method of an image transmitting apparatus, the control method including: transmitting to an image receiving apparatus, through a predetermined number of transfer paths and by a predetermined transfer protocol, a data stream including image content; receiving from the image receiving apparatus, status information of the image receiving apparatus; determining, based on the status information, whether a status of the image receiving apparatus is changed; and changing at least one of the transfer protocol, the number of transfer paths, and bitrate of the data stream in response to determining that the status of the image receiving apparatus is changed.

The image receiving apparatus and the image transmitting apparatus may be connected to each other via a cable according to a DisplayPort protocol.

The transfer protocol may be selected from the group consisting of: a reduced bit rate (RBR) protocol, a high bit rate 1 (HBR1) protocol, and a high bit rate 2 (HBR2) protocol.

The status information may include at least one of a performance level of the image receiving apparatus, a temperature of the image receiving apparatus, and a reception error in the received data stream.

### BRIEF DESCRIPTION OF THE DRAWINGS

The above and/or other aspects will become more apparent by describing certain exemplary embodiments with reference to the accompanying drawings, in which:

FIG. 1 is a block diagram illustrating a configuration of a system according to a first exemplary embodiment;

FIG. 2 illustrates a communication structure between a source device and a synch device in the system of FIG. 1;

FIG. 3 illustrates data transmission between the source device and the synch device in the system of FIG. 1;

FIG. 4 illustrates an initial communication structure for data transmission between the source device and the synch device according to a second exemplary embodiment;

FIG. 5 illustrates a changed communication structure from the initial communication structure of FIG. 4;

FIG. 6 illustrates an initial communication structure for data transmission between the source device and the synch device according to a third exemplary embodiment;

FIGS. 7 and 8 illustrate changed communication structures from the initial communication structure of FIG. 6;

FIG. 9 is a flowchart illustrating a control method of the source device according to a fourth exemplary embodiment; and

FIG. 10 is a flowchart illustrating a control method of the synch device according to the fourth exemplary embodiment.

### DETAILED DESCRIPTION OF EXEMPLARY EMBODIMENTS

Below, certain exemplary embodiments will be described in greater detail with reference to accompanying drawings. The matters defined in the description, such as detailed construction and elements, are provided to assist in a comprehensive understanding of the exemplary embodiments However, the exemplary embodiments may be embodied in various forms without being limited to the exemplary embodiments set forth herein. Descriptions of well-known parts are omitted for clarity and conciseness, and like reference numerals refer to like elements throughout.

As used herein, expressions such as "at least one of," when preceding a list of elements, modify the entire list of elements and do not modify the individual elements of the list.

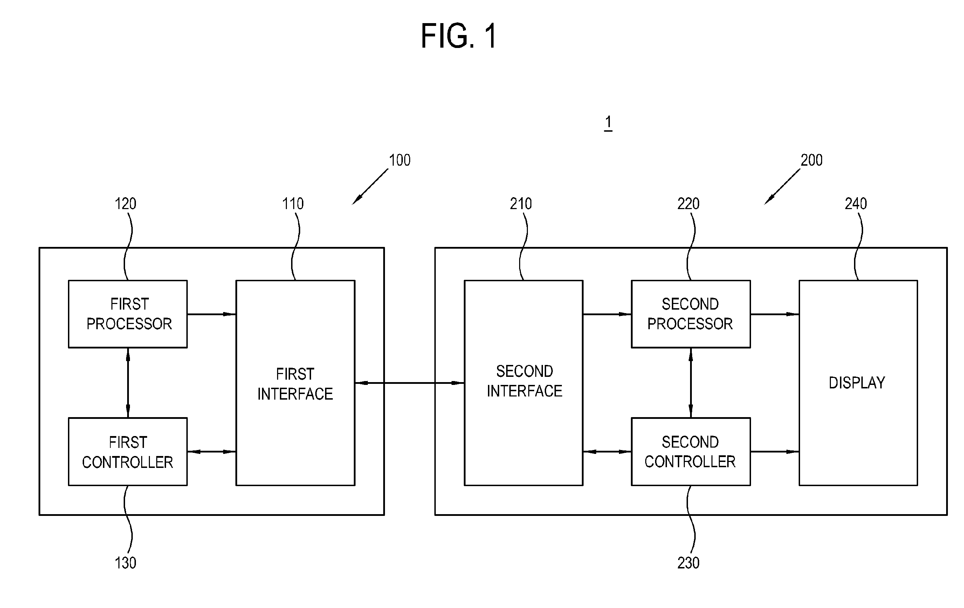

FIG. 1 is a block diagram illustrating a configuration of a system 1 according to a first exemplary embodiment. Although the system 1 is configured to include two image processing apparatuses 100 and 200 connected to each other, the present exemplary embodiment is not limited thereto. For example, the present exemplary embodiment may be also applied to a system having a configuration such that a single apparatus is connected to a plurality of different devices which may include three or more devices connected in series, and which may be achieved by applying principles of the present exemplary embodiment.

As shown in FIG. 1, the system 1 according to the present exemplary embodiment includes the two image processing apparatuses 100 and 200 connected for communications with each other to transmit and receive image data. Here, one of the two image processing apparatuses 100 and 200 is configured to output an image data stream and the other is configured to receive the output image data stream. The image processing apparatus to output the image data stream is referred to as a source device 100, while the image processing apparatus to receive the image data stream output from the source device 100 is referred to as a synch device 200.

In the present exemplary embodiment, the source device 100 first processes and outputs image data and the synch device 200 secondarily processes and outputs the image data received from the source device 100 to display an image. However, it should be noted that such an example is provided for illustrative purposes only and the synch device 200 may output the image data to another device.

The source device 100 includes a first interface 110 to output image data, a first processor 120 to process image data, received from the outside (i.e., external to the source device 100) or previously stored, and transmit the image data to the first interface 110, and a first controller 130 to control operations of components of the source device 100. The source device 100 may further include a communication interface (not shown) to receive image data from the outside or a memory (not shown) to store image data.

The synch device 200 includes a second interface 210 to receive a stream of image data output from the source device 100, a second processor 220 to process the image data received by the second interface 210, and a second controller 230 to control operations of components of the synch device 200. When the synch device 200 is configured as a display apparatus, the synch device 200 may further include a display 240 to display an image based on image data processed by the second processor 220.

Hereinafter, each component of the source device 100 will be described in greater detail.

The first processor 120 performs various types of image processing on image data. The first processor 120 transmits processed image data to the first interface 110, so that the image data is output from the source device 100.

The first processor 120 may perform any kind of image processing process, without being limited to, for example, decoding in accordance with different image formats, de-interlacing, frame refresh rate conversion, noise reduction to improve image quality and detail enhancement, etc. The first processor 120 may be provided as an individual component to independently conduct each of the preceding processes or as an image processing board including an integrated multi-functional system on chip (SOC).

The first controller 130 is configured as a central processing unit (CPU) to perform and control operations of the first processor 120 or the first interface 110. The first controller 130 may be configured to be mounted on an image processing board along with the first processor 120.

Hereinafter, each component of the synch device 200 will be described in greater detail.

The second processor 220 performs various types of image processing processes on image data received by the second interface 210 to display an image and outputs processed image data to the display 240 so that an image is displayed on the display 240. The second processor 220 may perform similar image processing processes to those performed by the first processor 120, but may have different settings to be applied in a process. Alternatively, the second processor 220 may conduct a different process from that performed by the first processor 120 depending on a characteristic of the synch device 200, for example, scaling in view of a resolution of the display 240.

The second controller 230 is configured as a CPU to conduct and control operations of the second processor 220, the second interface 210, and the display 240, similar to the first controller 130.

The display 240 displays an image based on image data output from the second processor 220. The display 240 may be configured as various displays such as those using liquid crystals, plasma, light emitting diodes, organic light emitting diodes, a surface conduction electron emitter, a carbon nano-tube, nano-crystals, or the like.

The display 240 may further include an additional element according to a configuration thereof. For example, when the display 240 has a liquid crystal display (LCD) panel, the display 240 may include a backlight unit (not shown) to provide light to the LCD panel and a panel drive board (not shown) to drive the panel.

In addition to the foregoing components, the source device 100 and the synch device 200 may further include diverse components for operations, for example, a switching mode power supply (not shown) to provide power.

The first interface 110 and the second interface 210 are connected to each other to transmit and receive image data. In the present exemplary embodiment, the first interface 110 and the second interface 210 are connected to each other via a cable according to a DisplayPort protocol.

DisplayPort protocol is a digital display interface developed by the Video Electronics Standards Association (VESA), which enables transmission of high-resolution digital video and audio.

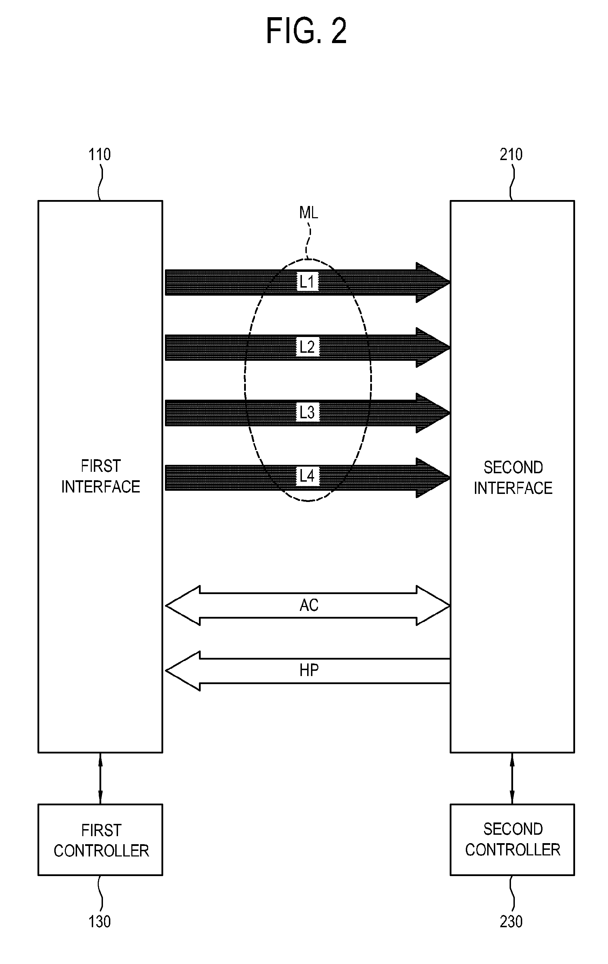

FIG. 2 illustrates a communication structure between the first interface 110 and the second interface 210.

As shown in FIG. 2, when a transfer protocol between the first interface 110 and the second interface 210 is DisplayPort, a data communication structure between the first interface 110 and the second interface 210 includes a main link ML for transmitting image data from the first interface 110 to the second interface 210, an auxiliary channel AC for exchange of information between the first interface 110 and the second interface 210, and a hot plug detection (HPD) line HP for transmitting an interrupt request signal from the second interface 210 to the first interface 110.

The main link ML may enable data transfer from the source device 100 to the synch device 200 only. Data transferred through the main link ML includes uncompressed image data and audio data, and additional data, such as properties of the image data and audio data.

The main link ML includes four lanes L1, L2, L3, and L4 for transfer of a data stream. When a data stream is transferred through the main link ML, a transfer rate in accordance with any one of three preset transfer protocols: reduced bit rate (RBR), high bit rate 1 (HBR1), and high bit rate 2 (HBR2), is selected and at least one of the four lanes L1, L2, L3, and L4 is selected to transfer the data stream.

RBR, HBR1, and HBR2 are terms to distinguish one another in DisplayPort. The transfer rates of the transfer protocols, in the order of highest to lowest, is HBR2, HBR1, and RBR.

When a single lane L1 is used to transfer a data stream, RBR enables a transfer rate of 1.62 Gbps, HBR1 enables a transfer rate of 2.7 Gbps, and HBR2 enables a transfer rate of 5.4 Gbps. When two lanes L1 and L2 are used to transfer a data stream, RBR enables a transfer rate of 3.24 Gbps, HBR1 enables a transfer rate of 5.4 Gbps, and HBR2 enables a transfer rate of 10.8 Gbps. When the four lanes L1, L2, L3, and L4 are used to transfer a data stream, RBR enables a transfer rate of 6.48 Gbps, HBR1 enables a transfer rate of 10.8 Gbps, and HBR2 enables a transfer rate of 21.6 Gbps.

For example, to transfer a data stream at a transfer rate of 5.4 Gbps, a single lane L1 may be used in accordance with HBR2, two lanes L1 and L2 may be used in accordance with HBR1, or the four lanes L1, L2, L3, and L4 may be used in accordance with BRB. To transfer a data stream at a transfer rate of 10.8 Gbps, two lanes L1 and L2 may be used in accordance with HBR2, or the four lanes L1, L2, L3, or L4 may be used in accordance with HBR1.

A selection of the transfer protocols and the lanes L1, L2, L3, and L4 may be determined by the first controller 130 based on hardware and software specifications of the source device 100 and the synch device 200.

The auxiliary channel AC is a communication channel through which the first controller 130 and the second controller 230 exchange information for managing and controlling the main link ML, the source device 100, and the synch device 200. That is, the auxiliary channel AC enables two-way communications of information, unlike the main link ML and the HPD line HP that enable one-way communications.

The HPD line HP is configured to send a signal only from the synch device 200 to the source device 100. The HPD line HP may be used for the second controller 230 to request the first controller 130 to reset an operation when a current status of the synch device 200 is changed or when a data stream is not normally received through the main link ML.

For example, when the source device 100 and the synch device 200 are first connected to each other or when hardware or software of the synch device 200 is initialized, the second controller 230 notifies the first controller 130 of an HPD signal reporting this connection through the HPD line HP. The first controller 130 acquires information, such as extended display identification data (EDID) and DisplayPort configuration data (DPCD) of the synch device 200, from the synch device 200 through the auxiliary channel AC.

The first controller 130 determines a default value of a performance level of the synch device 200 from the acquired information. Here, the performance level of the synch device 200 is a value obtained by quantifying capabilities of the synch device 200 to transmit, receive, and process data based on the hardware and software specifications of the synch device 200. The default value of the performance level is a fixed value determined and stored in advance in a manufacture process based on the specifications of the synch device 200.

The first controller 130 may set up the main link ML for transmitting the data stream in consideration of the default value of the performance level of the synch device 200 and a default value of a performance level of the source device 100. That is, the first controller 130 selects lanes L1, L2, L3, or L4 and a transfer protocol for achieving optimal performance of the source device 100 and the synch device 200 to mutually transmit/receive and process a data stream. The first controller 130 transmits the data stream using the selected transfer protocol and lanes L1, L2, L3, or L4.

However, various factors that may occur in the synch device 200 during transmission of the data stream may cause a problem in an image finally displayed on the synch device 200.

For example, the performance level of the synch device 200 may drop below the default value with use. For instance, with use of the synch deice 200, operation/processing performance of the second processor 220 or the second controller 230 may deteriorate due to loads caused by multi-threading/multi-tasking of the synch device 200. Furthermore, the temperature of the synch device 200 may increase with use of the synch deice 200 and deteriorate an operation of the synch device 200.

In addition, an error may occur in a data stream transmitted to the second interface 210 through a predetermined lane L1, L2, L3, or L4 of the main link ML. The first controller 130 periodically attaches data for checking an error to a data stream when the data stream is transmitted from the first interface 110 to the second interface 210. Accordingly, the second controller 230 checks the data for checking the error transmitted to the second interface 210, thereby verifying whether there is an error in the data stream received through each of the lanes L1, L2, L3, and L4.

When the current status of the synch device 200 is changed, a problem may occur when the synch device 200 receives a data stream transmitted according to an initial setting of the main link ML based on the DPCD or processes the received data stream.

Thus, the present exemplary embodiment utilizes the following method.

While the data stream is transmitted from the first interface 110 to the second interface 120, the second controller 230 periodically transmits status information indicating the current status of the synch device 200 through the auxiliary channel AC. When it is determined that the current status of the synch device 200 is changed based on the status information of the synch device 200 periodically received from the auxiliary channel AC, the first controller 130 changes a transfer method of the data stream or information quantity of a data stream to be transmitted.

Here, the status information indicating the current status of the synch device 200 includes at least one of a current performance level of the synch device 200, a temperature of the synch device 200, and information on whether the data stream received by the synch device 200 involves an error.

Further, the change of the transfer method of the data stream includes at least one of a change of a transfer rate in accordance with a transfer protocol and a change of a lane L1, L2, L3, and L4 selected for transfer.

In addition, the change of the information quantity of the data stream to be transmitted includes an image quality change of image content that is a source of the data stream. The image quality change of the image content may include, for example, reducing image quality of the image content from ultra-high definition (UHD) to full high definition (FHD).

Hereinafter, certain exemplary embodiments will be described in greater detail.

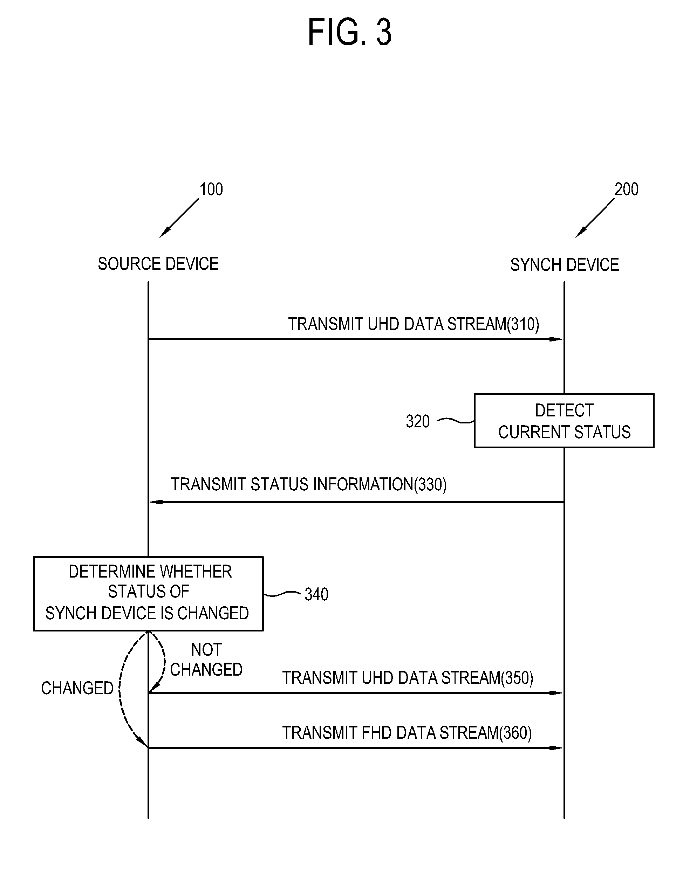

FIG. 3 illustrates data transmission between the source device 100 and the synch device 200 according to a first exemplary embodiment.

As shown in FIG. 3, the source device 100 transmits a data stream of image content in UHD to the synch device 200 according to a preset transfer method (operation 310).

The synch device 200 periodically detects a current status of the synch device 200 while the data stream is transmitted from the source device 100 (operation 320). The synch device 200 may include a component to detect the current status, for instance, a microcontroller (not shown) to determine a performance level of the synch device 200 and a sensor (not shown) to detect an internal temperature of the synch device 200 or a temperature of a specific component.

The synch device 200 periodically transmits status information indicating the detected current status of the synch device 200 to the source device 100 while the data stream is transmitted from the source device 100 (operation 330).

The source device 100 determines whether a status of the synch device 200 is changed based on the status information received from the synch device 200 (operation 340). When the status of the synch device 200 is not changed, the source device 100 continues to transmit the original data stream in UHD to the synch device 200 (operation 350).

However, when the status of the synch device 200 is changed, the source device 100 transmits a data stream having a lower image quality than UHD, for example, a data stream in FHD, to the synch device 200 (operation 360). The image content in UHD requires a transfer rate of 7.6 Gbps, while image content in FHD having a relatively smaller quantity of information requires a transfer rate of 1.5 Gbps.

When the status information received from the synch device 200 indicates that the performance level of the synch device 200 has decreased or that the temperature of the synch device 200 has increased, the source device 100 may determine that the synch device 200 has lower capabilities to receive and process the data stream at the current status than at an initial status. Thus, the source device 100 reduces information quantity of data streams transmitted per unit time (i.e., bitrate) to provide the data stream in accordance with the changed current status of the synch device 200.

When the performance level of the synch device 200 increases back to a level at the initial status or when the temperature of the synch device 200 decreases to a specified level, the source device 100 adjusts information quantity of data streams transmitted per unit time back to the original level. In the present exemplary embodiment, the source device 100 transmits the data stream adjusted from FHD to UHD to the synch device 200.

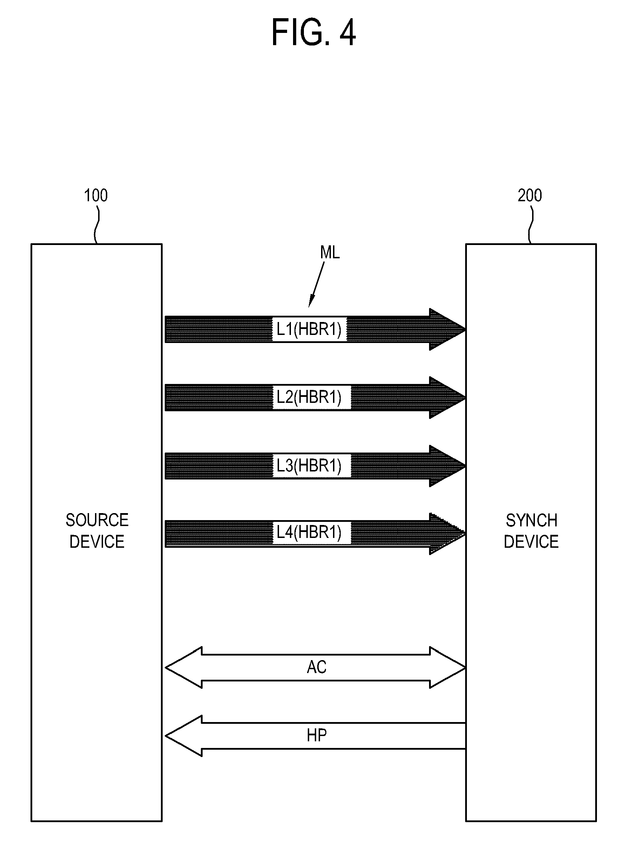

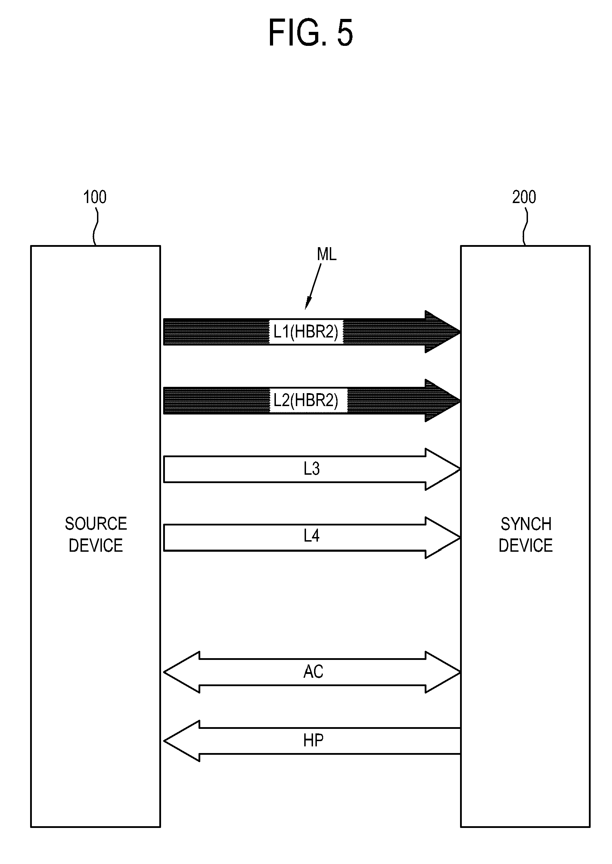

FIG. 4 illustrates an initial communication structure for data transmission between the source device 100 and the synch device 200 according to a second exemplary embodiment. FIG. 5 illustrates a changed communication structure from the initial communication structure of FIG. 4.

As shown in FIG. 4, the source device 100 transmits a data stream to the synch device 200 using the main link ML.

For example, if image content in UHD requires a transfer rate of 7.6 Gbps, the main link ML may be set up by either of two method so as to transmit a data stream of the image content from the source device 100 to the synch device 200. In a first method, the data stream is transmitted in accordance with a transfer protocol HBR2 through two lanes L1 and L2. In a second method, the data stream is transmitted in accordance with a transfer protocol HBR1 through the four lanes L1, L2, L3, and L4.

If the second method is adopted in an initial state, the source device 100 transmits the data stream in accordance with HBR1 using all four lanes L1, L2, L3, and L4. Since HBR1 realizes a transfer rate of 2.7 Gbps for each of the lanes L1, L2, L3, and L4 and a total transfer rate of 10.8 Gbps with all lanes L1, L2, L3, and L4, the data stream may be transmitted at 7.6 Gbps by the second method.

In FIGS. 4 to 8, lanes L1, L2, L3, or L4 being used for transmission of a data stream are indicated with hatched markings.

While the data stream is transmitted in accordance with HBR1 through all four lanes L1, L2, L3, and L4, the source device 100 periodically receives the status information of the synch device 200 through the auxiliary channel AC. The source device 100 determines whether the status of the synch device 200 is changed based on the status information of the synch device 200.

When the status of the synch device 200 is changed, the source device 100 changes an original selection of lanes L1, L2, L3, or L4 and an original transfer protocol.

As shown in FIG. 5, when it is determined that the temperature of the synch device 200 has increased, a fewer number of lanes L1, L2, L3, or L4 may be used to reduce the temperature of the synch device 200.

When it is determined that the temperature of the synch device 200 has increased, the source device 100 selects two lanes L1 and L2 for use among the four lanes L1, L2, L3, and L4 used in the initial state, and does not use the other two lanes L3 and L4. Also, the source device 100 changes the transfer protocol from HBR1 to HBR2, as a fewer number of lanes L1 and L2 are used.

Despite the change of the transfer method, the transfer rate remains the same as in the initial state. However, since a number of used lanes L1, L2, L3, or L2 decreases from four to two, temperature rise of the synch device 200 may be suppressed.

Alternatively, in an initial state in which two lanes L1 and L2 are used, as shown in FIG. 5, a reception error may occur in a data stream received by the synch device 200. When it is determined that the reception error occurs in the synch device 200, the source device 100 may increase a number of lanes L1, L2, L3, or L4 for use, as in FIG. 4. In a communication structure for transmitting a data stream, since a reception error occurs more easily at a recipient in a high transfer rate, a number of lanes L1, L2, L3, or L4 is increased, thereby relatively reducing the transfer rate to prevent the reception error.

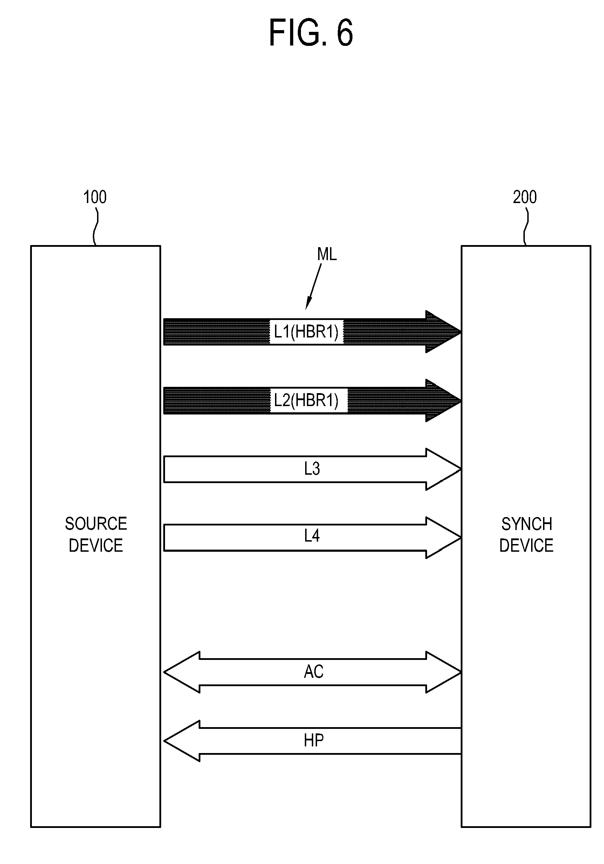

FIG. 6 illustrates an initial communication structure for data transmission between the source device 100 and the synch device 200 according to a third exemplary embodiment.

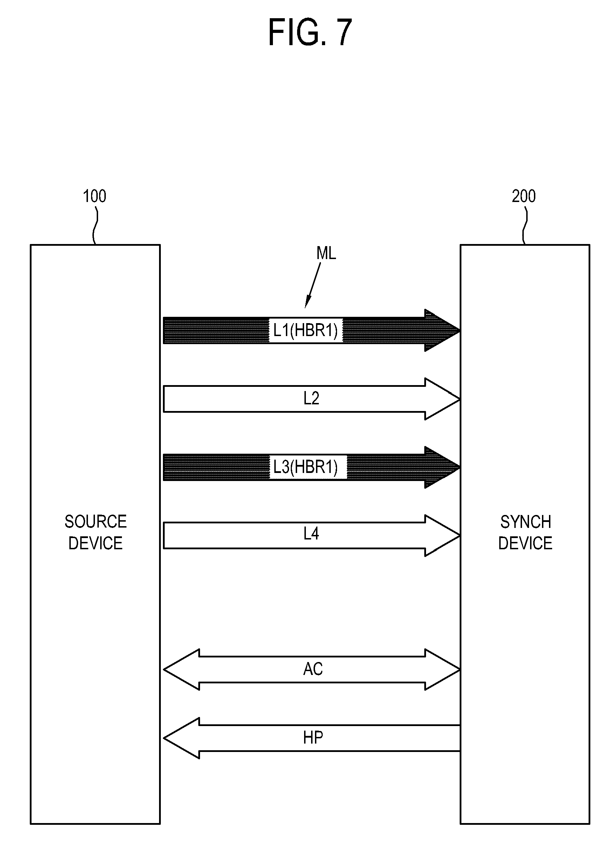

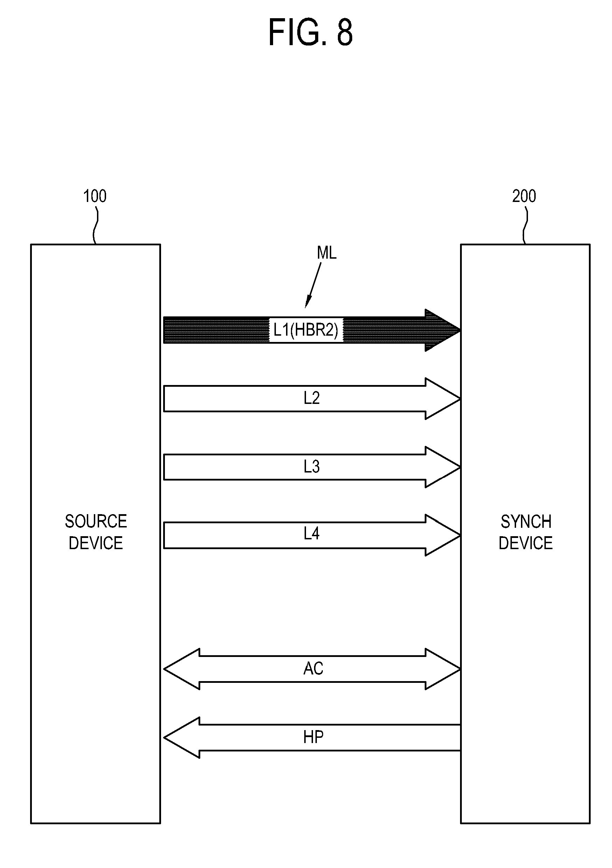

FIGS. 7 and 8 illustrate changed communication structures from the initial communication structure of FIG. 6.

As shown in FIG. 6, the source device 100 transmits data streams in accordance with HBR1 using two lanes L1 and L2 in an initial state. In this case, the data stream may be transmitted at a transfer rate of 5.4 Gbps.

Here, the source device 100 may receive information that a reception error occurs in a data stream transmitted through a second lane L2, among the lanes L1 and L2 currently in use, from the synch device 200 through the auxiliary channel AC.

If no reception error occurs in a data stream transmitted through a first lane L1, while a reception error occurs in the data stream through the second lane L2, among the lanes L1 and L2 currently in use, the second lane L2 may be determined to have a physical or logical problem.

Thus, the source device 100 may select another lane L3 for use, instead of the second lane L2, which is determined to have a problem.

As shown in FIG. 7, the source device 100 selects the first lane L1 and a third lane L3, among all lanes L1, L2, L3, and L4, excluding the second lane L2 determined to have a problem. The source device 100 transmits data streams using the selected lanes L1 and L3 in accordance with HBR1, the same protocol as that in FIG. 6.

Alternatively, as shown in FIG. 8, the source device 100 may select only the first lane L1, among all lanes L1, L2, L3, and L4, excluding the second lane L2 determined to have a problem. Since the number of selected lanes L1, L2, L3, or L4 is reduced from two to one, the source device 100 transmits data streams through the first lane L1 in accordance with HBR2 which has a faster transfer rate than HBR1.

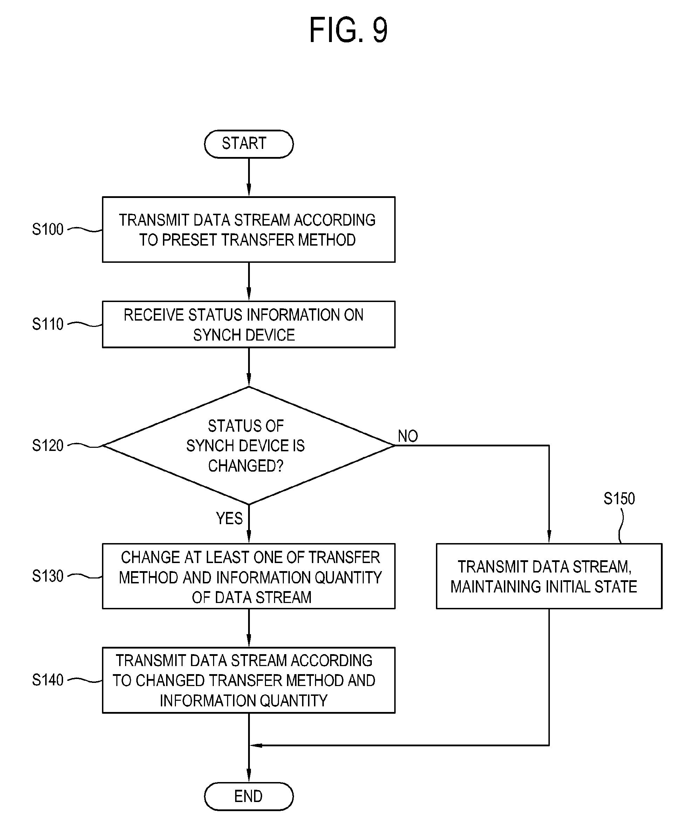

Hereinafter, a control method of the source device 100 according to a fourth exemplary embodiment will be described with reference to FIG. 9. Configurations of the source device 100 and the synch device 200 according to the fourth exemplary embodiment are substantially the same as those described above, and thus descriptions thereof are omitted herein.

FIG. 9 is a flowchart illustrating the control method of the source device 100 according to the fourth exemplary embodiment.

As shown in FIG. 9, the source device 100 transmits a data stream to the synch device 200 based on a preset transfer method, in operation S100. Operation S100 is defined as an initial state.

While the data stream is transmitted, the source device 100 receives status information of the synch device 200 from the synch device 200, in operation S110. The status information of the synch device 200 indicates a state of the synch device 200 ready to receive and process a data stream at a present time.

In operation S120, the source device 100 determines whether the status of the synch device 200 is changed from the initial state based on the received status information.

When the status of the synch device 200 is determined to be changed from the initial state, the source device 100 changes at least one of the transfer method of the data stream and information quantity of data streams transmitted per unit time, in operation S130. The source device 100 transmits a data stream according to the changed transfer method and the changed information quantity, in operation S140.

However, when the status of the synch device 200 is determined not to be changed from the initial state, the source device 100 transmits a data stream according to the same transfer method or information quantity as used in the initial state, in operation S150.

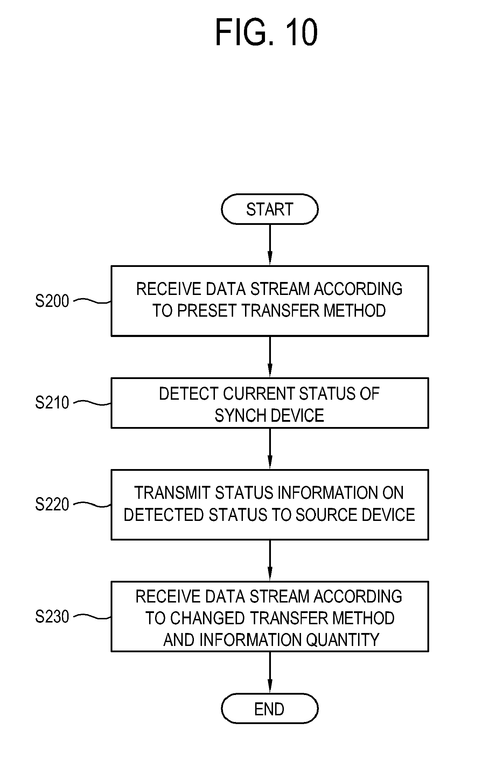

Hereinafter, a control method of the synch device 200 according to the fourth exemplary embodiment will be described with reference to FIG. 10.

FIG. 10 is a flowchart illustrating the control method of the synch device 200 according to the fourth exemplary embodiment.

As shown in FIG. 10, the synch device 200 receives a data stream from the source device 100 based on a preset transfer method, in operation S200. Operation S200 is defined as an initial state.

While the data stream is received, the synch device 200 detects a current status of the synch device, in operation S210. The current status of the synch device 200 refers to a state of the synch device 200 ready to receive and process a data stream at a present time. The synch device 200 transmits status information indicating the detected status to the source device 100, in operation S220.

In operation S230, the synch device 200 receives a data stream according to a transfer method of a data stream and information quantity changed, by the source device 100, from those in the initial state. The transfer method of the data stream and the information quantity are changed by the source device 100 based on the status information transmitted, in operation S220.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image transmitting apparatus comprising:
a processor to process image content;
an interface to transmit a data stream of the image content processed by the processor to an image receiving apparatus; and
a controller to control the data stream to be transmitted from the interface based on a preset transfer method, to receive status information indicating a current status of the image receiving apparatus ready to receive and process the data stream while the data stream is transmitted, and to change at least one of the transfer method of the data stream and information quantity of the data stream transmitted per unit time when the status of the image receiving apparatus is determined to be changed based on the status information.

2. The image transmitting apparatus of claim 1, wherein the interface comprises a plurality of transfer paths to transmit the data stream, and the controller selects at least one of the transfer paths to transmit the data stream.

3. The image transmitting apparatus of claim 2, wherein the controller changes the transfer method by changing the selected transfer path to transmit the data stream among the plurality of transfer paths.

4. The image transmitting apparatus of claim 2, wherein the controller changes the transfer method by changing a transfer rate of the data stream through the selected transfer path.

5. The image transmitting apparatus of any preceding claim, wherein the controller generates the data stream by changing at least one of image quality and resolution of the image content to change the information quantity of the data stream transmitted per unit time.

6. The image transmitting apparatus of any preceding claim, wherein the status information comprises at least one of information on a performance level indicating a processibility level of the data stream by a processor of the image receiving apparatus, information on a temperature of the image receiving apparatus, and information on a reception error in the data stream received by the image receiving apparatus, and the controller determines that the status of the image receiving apparatus is changed when the performance level or the temperature of the image receiving apparatus is changed or when an error occurs in the data stream received by the image receiving apparatus.

7. The image transmitting apparatus of claim 6, wherein the controller reduces the information quantity of the data stream transmitted per unit time when the performance level decreases or the temperature of the image receiving apparatus increases.

8. An image receiving apparatus comprising:
an interface to receive a data stream of image content from an image transmitting apparatus;
a processor to process the data stream received by the interface to display an image;
a detector to detect a current status of the image receiving apparatus ready to receive and process the data stream; and
a controller to transmit status information indicating the status detected by the detector to the image transmitting apparatus through the interface while the data stream is received by the interface so that at least one of a transfer method of the data stream by the image transmitting apparatus and information quantity of the data stream transmitted per unit time is changed based on a result of determining a change of the status of the image receiving apparatus by the image transmitting apparatus.

9. The image receiving apparatus of claim 8, wherein the interface comprises a plurality of reception paths to receive the data stream, and the transfer method is changed by changing a selection of reception paths to receive the data stream among the reception paths.

10. The image receiving apparatus of any of claims 8 to 9, wherein the interface comprises a plurality of reception paths to receive the data stream, and the transfer method is changed by changing a transfer rate of the data stream through a selected reception path.

11. The image receiving apparatus of any of claims 8 to 10, wherein the information quantity of the data stream transmitted per unit time is changed by changing at least one of image quality and resolution of the image content to generate the data stream.

12. The image receiving apparatus of any of claims 8 to 11, wherein the detector detects at least one of a performance level indicating a processibility level of the data stream by a processor, temperature of the image receiving apparatus, and a reception error in the data stream received by the interface, and the controller transmits the status information comprising a detection result to the image transmitting apparatus.

13. The image receiving apparatus of claim 12, wherein the information quantity of the data stream transmitted per unit time is reduced when the performance level decreases or the temperature of the image receiving apparatus increases.

14. A control method of an image transmitting apparatus, the control method comprising:
transmitting a data stream of image content to an image receiving apparatus based on a preset transfer method;
receiving status information indicating a current status of the image receiving apparatus ready to receive and process the data stream while the data stream is transmitted; and
changing at least one of the transfer method of the data stream and information quantity of the data stream transmitted per unit time when the status of the image receiving apparatus is determined to be changed based on the status information.

15. A control method of an image receiving apparatus, the control method comprising:
receiving a data stream of image content from an image transmitting apparatus;
detecting a current status of the image receiving apparatus ready to receive and process the data stream; and
transmitting status information indicating the detected status to the image transmitting apparatus while the data stream is received so that at least one of a transfer method of the data stream by the image transmitting apparatus and information quantity of the data stream transmitted per unit time is changed based on a result of determining a change of the status of the image receiving apparatus by the image transmitting apparatus.
